# EUROPÄISCHE PATENTANMELDUNG

(11) **EP 2 058 074 A1**
(43) Veröffentlichungstag der Anmeldung: **13.05.2009**
(21) Anmeldenummer: 08019786.6
(22) Anmeldetag: 12.11.2008
(51) Int. Cl.: B23C 5/10

(54) **Fräser**

(30) Priorität: 12.11.2007 DE 202007015742 U
(71) Anmelder: Hofmann & Vratny OHG, 85617 Assling (DE)
(72) Erfinder: Vratny, Zdenek, 85617 Aßling (DE)
(74) Vertreter: Czybulka, Uwe

(57) **Zusammenfassung**

Der Fräser zum spanabhebenden Bearbeiten von Werkstücken weist zumindest eine Frässchneide auf, die in Umfangsrichtung des Fräsers gelegen ist und sich in einem Schraubengang erstreckt. An die Frässchneide schließt sich eine Spanabführrille zum Abführen der beim Fräsen erzeugten Späne des zu bearbeitenden Werkstückes mit einer von der Frässchneide ausgehenden Freifläche an. Gemäß der Erfindung ist zumindest ein Teil der Freifläche (7) mit einer Schruppverzahnung (8) versehen, die von der Frässchneide ausgeht und sich, in Umfangsrichtung des Fräsers gesehen, über zumindest einen Teil des Querschnittes der jeweiligen Spanabführrille (6) erstreckt. Vorzugsweise ist die Schruppverzahnung (8) ein Wellenschliff, der abwechselnd Berge (9) und Täler (10) aufweist.

## Beschreibung

Die Erfindung bezieht sich auf einen Fräser zum spanabhebenden Bearbeiten von Werkstücken gemäß dem Oberbegriff des Patentanspruchs 1.

Solche Fräser weisen einen zylindrischen Werkzeugschaft auf, der ein oberes Einspannende beziehungsweise einen Einspannstutzen zum Einspannen des Fräsers in eine Fräsmaschine und einen sich daran anschließenden Fräsbereich aufweist. Der Fräsbereich weist zumindest eine Frässchneide auf, die im Wesentlichen in Umfangsrichtung des Fräsers gelegen ist und sich jeweils in einem Schraubengang mit einem gegenüber der Mittelachse des Fräsers angestellten Steigungswinkel erstreckt. An die Frässchneide schließt sich jeweils eine Spanabführrille zum Abführen der beim Fräsen erzeugten Späne des zu bearbeitenden Werkstückes an, wobei sich der an die Frässchneide anschließende Bereich der Spanabführrille als Freifläche bezeichnet wird.

Solche Fräser werden als Schlichtfräser, Schruppfräser oder als kombinierte Schrupp-/Schlichtfräser eingesetzt; vgl. etwa die DE 20 2006 013 594 der Anmelderin. Die Fräsflächen liegen bei den bekannten Fräsern in Umfangsrichtung des Fräsers auf den Schraubengängen und weisen entsprechend der Art des Fräsers glatte Schlichtflächen oder aufgeraute und zum Beispiel mit einem Wellenschliff versehene Schruppflächen auf. Bei kombinierten Schrupp-/Schlichtfräsern kann jeweils ein Schraubengang mit einer Schruppfläche und ein weiterer Schraubengang mit einer glatten Schlichtfläche versehen sein;
wobei es aber auch möglich ist, die Fräsfläche eines Schraubengangs abwechselnd mit Schruppbereichen und Schlichtbereichen zu versehen; vgl. ebenfalls die zitierte DE 20 2006 013 594.

Ein Problem bei derartigen Fräsern ist stets die Abführung der beim Fräsen erzeugten Späne über die Spanabführrillen. Die abgefrästen Späne prallen nämlich auf die Freifläche auf,
wobei hohe Belastungen auf den Fräser ausgeübt werden. Dies kann zu Vibrationen, zur Beschädigung der Frässchneide und sogar zum Bruch des Fräsers führen. Außerdem können die Späne häufig nicht glatt abgeführt werden, was zu sogenannten Spanklemmern, d. h. zur Verstopfung der Spanabführrillen führen kann.

Diese Nachteile können gemäß der erwähnten DE 20 2006 013 594 allerdings weitgehend vermieden werden, wenn durch eine entsprechende Ausgestaltung der Fräsflächen nur relativ kurze Späne erzeugt werden.

Der Erfindung liegt die Aufgabe zugrunde, eine neue Konstruktion für einen Fräser der in Rede stehenden Art anzugeben, mit dem kurze Späne erzeugt werden, die über die Spanabführrillen problemlos abgeführt werden können.

Diese Aufgabe ist gemäß der Erfindung durch die Merkmale des Patentanspruchs 1 gelöst.

Demgemäß ist zumindest ein Teil der Freifläche als Fräsfläche mit einer Schruppverzahnung versehen, die sich, von der Frässchneide ausgehend, in Umfangsrichtung des Fräsers gesehen, über zumindest einen Teil der jeweiligen Spanabführrille erstreckt. Die Fräsflächen bei einem Fräser gemäß der Erfindung liegen somit im Gegensatz zu dem bekannten Stand der Technik nicht in der Umfangsfläche des Fräsers, sondern im Bereich der Freiflächen, sodass der Fräser sozusagen eine innen liegende Fräsfläche aufweist, die in der in den Fräser eintauchenden Freifläche gelegen ist.

Der Schruppbereich weist vorzugsweise eine Schruppverzahnung von in Längsrichtung der Schraubengänge abwechselnd angeordneten Bergen und Tälern auf: Bevorzugt ist der Abstand zwischen benachbarten Bergen und Tälern der Schruppverzahnung geringer als die in Umfangsrichtung des Fräsers gesehene Breite einer Spanabführrille und liegt im Bereich zwischen einem Zehntel und der Hälfte der Breite der jeweiligen Spanabführrille, sodass die Länge der Späne ebenfalls in diesem Bereich liegt. Da bei der Bearbeitung eines Werkstückes im Wesentlichen die Berge dieser Schruppverzahnung wirksam sind, fallen aufgrund dieser Dimensionierung nur sehr kurze Späne an, die problemlos über eine Spanabführrille abzuführen sind.

Ein wesentlicher Vorteil eines Fräsers mit einem innenliegenden Fräsbereich ist, dass ein abgefräster Span zunächst nach unten tief in die Spanabführrille, das heißt weg von der Schneide eintaucht und dann nach oben umgelenkt wird. Durch eine solche Ausgestaltung der Fräsfläche werden starke Belastungen des Fräsers vermieden, und es können praktisch keine Spanklemmer auftreten.

Mit einer Anordnung der Fräsflächen im Bereich der Freiflächen eines Fräsers gemäß der Erfindung können reine Schruppfräser oder kombinierte Schrupp-/Schlichtfräser konstruiert werden.

Bei reinen Schruppfräsern sind alle innenliegenden Fräsflächen als Schruppflächen mit aufgerauter Oberfläche, z. B. in Form eines Wellenschliffs, ausgebildet.

Bei kombinierten Schrupp-/Schlichtfräsern mit mehreren Schraubengängen ist es möglich, jeweils einen Schraubengang mit einer innenliegenden Schruppfläche und den nächsten Schraubengang mit einer innenliegenden glatten Schlichtfläche auszurüsten.

Gemäß einer bevorzugten Ausbildung der Erfindung weist jede Freifläche eines Schraubengangs abwechselnd Schruppbereiche und Schlichtbereiche mit glatter Oberfläche auf. Bei Fräsern mit mehreren Schraubengängen wird bevorzugt jeder Schlichtbereich einer Freifläche in axialer Richtung des Fräsers auf einer im Wesentlichen gleichen axialen Höhe eines Schruppbereiches einer benachbarten, im Drehsinn des Fräsers vorlaufenden Freifläche angeordnet. Der Schlichtbereich einer Freifläche in axialer Richtung des Fräsers überdeckt hierbei bevorzugt den Schruppbereich der in Umfangsrichtung des Fräsers vorauslaufenden Freifläche, und zwar bevorzugt auf beiden Seiten des Schruppbereichs der benachbarten vorauslaufenden Freifläche. Auf diese Weise können in vielen Fällen Nachbearbeitungen des Werkstücks entfallen.

Es sind auch Konstruktionen eines Fräsers mit mehreren Schraubengängen denkbar, von denen einige innenliegende Schrupp-/Schlichtbereiche gemäß der Erfindung aufweisen, und weitere Schraubengänge Fräsflächen, das heißt Schruppund/oder Schlichtflächen aufweisen, die in Umfangsrichtung des Fräsers entsprechend der erwähnten DE 20 2006 013 594 gelegen sind.

Bei der Herstellung eines Fräsers gemäß der Erfindung wird zunächst der Spanraum, das heißt die Spanabführrille in einer Spiralform eingeschliffen, wonach dann in den Spanraum die vorzugsweise als Wellenschliff ausgebildete Schruppverzahnung und ggf. eine Schlichtverzahnung eingeschliffen wird. Anschließend wird die Freifläche eingeschliffen, die entweder radial eingeschliffen oder spitz verzahnt eingeschliffen wird, um die Schneide zu bilden. Vorzugsweise wird hierbei die radiale Freifläche im Bereich des Umfangs des Fräsers geringfügig abgerundet, wodurch sich eine gute Abführung der Späne in der Spanabführrille ergibt.

Die Erfindung ist in Ausführungsbeispielen anhand der beigefügten Zeichnung näher erläutert. In dieser stellen dar:
Figur 1 eine Seitenansicht eines Fräsers gemäß der Erfindung mit einer innenliegenden Schruppverzahnung, die als Wellenschliff ausgebildet ist;
Figur 2 eine perspektivische Teildarstellung des Fräsers gemäß Figur 1 mit einer innenliegenden Schruppverzahnung;
Figur 3 eine schematische Darstellung des Profiles des Wellenschliffs der Schruppverzahnung bei einem Fräser gemäß Figur 1; und
Figur 4 eine schematische Darstellung der Profile der Schrupp-/Schlichtverzahnungen für zwei benachbarte Schraubengänge eines Fräsers gemäß der Erfindung.

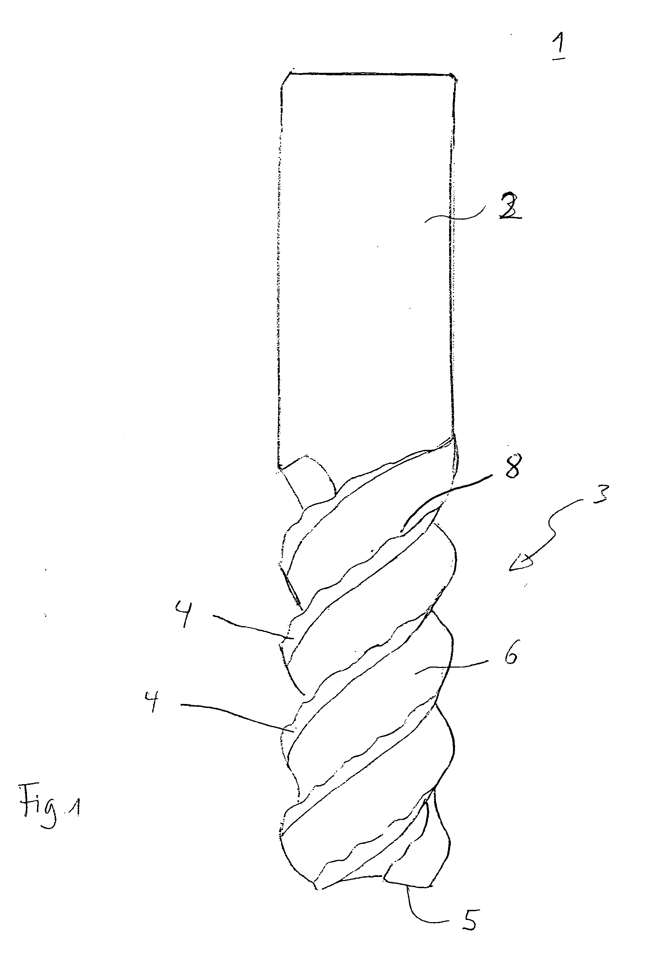

Ein Schruppfräser 1 weist einen zylindrischen Werkzeugschaft 2 auf, der mit seinem in der Figur 1 oberen Ende in eine hier nicht gezeigte Fräsmaschine eingespannt wird. Der sich an den glatten zylindrischen Werkzeugschaft anschließende Bereich des Schruppfräsers 1 ist als Fräsbereich 3 mit mehreren, in diesem Falle vier jeweils winkelmäßig längs des Umfanges des Schruppfräsers versetzten Schraubengängen 4 mit glatter Oberfläche versehen. Die Schraubengänge verlaufen in diesem Falle in einem gegen die Mittel-Längsachse des Fräsers 1 angestellten Winkel von etwa 45°. Dieser Winkel kann jedoch etwa in Abhängigkeit des Materials des zu bearbeitenden Werkstückes variiert werden.

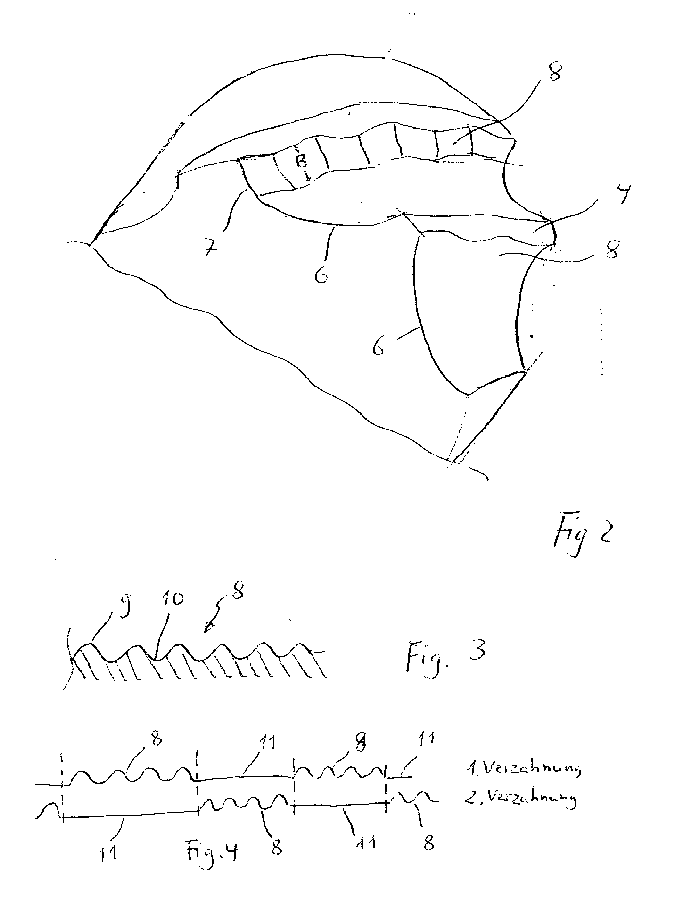

An dem in dem in Figur 1 unteren Ende des Fräsers 1 sind als Abschluss der Schraubengänge 4 Schneiden 5 vorgesehen, die in Figur 1 schematisch angedeutet sind. Zwischen benachbarten Schraubengängen 4 sind relativ tiefe Spanabführrillen 6 vorgesehen, die im Querschnitt etwa C-förmig sind und eine von den Schraubengängen 4 ausgehende Freifläche 7 aufweisen, in die eine innenliegende Schruppverzahnung 8 eingefräst ist. Die Schruppverzahnung 8 ist in den Spanabführrillen 6 auf der dem Einspannende des Fräsers 1 zugewandten Freifläche 7 vorgesehen. Die Schruppverzahnung 8 kann ein regelmäßiger Wellenschliff mit periodisch aufeinander folgenden Bergen 9 und Tälern 10 sein, wie dieses schematisch in Figur 3 dargestellt ist. Der Abstand zwischen den Bergen 9 und den Tälern 10 ist deutlich geringer als die in Umfangsrichtung des Fräsers gesehene Breite der Spanabführrillen. Dieser Abstand kann zum Beispiel in Abhängigkeit des Materiales des zu bearbeitenden Werkstückes variiert werden, natürlich ebenso die Amplitude dieses Wellenzuges.

Die Schruppverzahnung 8 erstreckt sich über eine Breite B innerhalb der Freifläche 7, die ebenfalls variiert werden kann. Die Breite B entspricht in dem darstellten Fall etwa einem Viertel der gesamten Breite der Spanabführrille 6, kann jedoch etwa zwischen einem Zehntel und der Hälfte der Breite der Spanabführrille 6 liegen.

Der Fräser 1 kann auch als Schrupp-/Schlichtfräser ausgebildet werden, wofür es mehrere Möglichkeiten gibt. Eine Möglichkeit ist, jeweils die Freifläche 7 eines Schraubenganges 4 beziehungsweise einer Spanabführrille 6 mit der genannten Schruppverzahnung 8 zu versehen, und die Freifläche des benachbarten Schraubenganges 4 glatt, das heißt als Schlichtfläche auszubilden.

Eine weitere Möglichkeit ist es, im Verlaufe eines Schraubenganges jeweils einen Bereich mit einer Schruppverzahnung 8 und einen sich daran anschließenden Bereich als glatte Schlichtverzahnung 11 auszugestalten. Dieses in Figur 4 oben gezeigte und als erste Verzahnung bezeichnete Profil wiederholt sich über die gesamte Länge einer jeweiligen Spanabführrille 6. Die Schrupp-/Schlichtverzahnung einer benachbarten Spanabführrille, die in Figur 4 als zweite Verzahnung bezeichnet ist, ist in Längsrichtung des Fräsers 1 gesehen so angeordnet, dass ein Schlichtbereich 11 einer nachlaufenden Spanabführrille 6 jeweils den Schruppbereich 8 einer vorauslaufenden Spanabführrille überdeckt und vorzugsweise diesen Schruppbereich auf beiden Seiten überlappt, wie dieses in den Profildarstellungen für zwei Schraubengänge in Figur 4 gezeigt ist. Hiermit wird durch die Schruppverzahnung 8 des vorauslaufenden Schraubenganges 4 das zu bearbeitende Werkstück geschruppt, wobei dann diese noch raue Oberfläche durch den Schlichtbereich 11 des nachlaufenden Schraubenganges 4 geschlichtet wird. Auf diese Weise ist in vielen Fällen eine Nachbearbeitung des Werkstücks nicht mehr notwendig.

Es ist des Weiteren möglich, die geschilderte innen liegende Schruppverzahnung beziehungsweise Schrupp-/Schlichtverzahnung längs eines Schraubengangs 4 mit einer herkömmlichen längs eines weiteren Schraubengangs 4 vorgesehenen äußeren Schruppverzahnung beziehungsweise Schrupp-/Schlichtverzahnung zu kombinieren, wie dieses aus der genannten DE 20 2006 013 594 bekannt ist.

Die beschriebene innenliegende Schruppverzahnung beziehungsweise Schrupp-/Schlichtverzahnung eines Fräsers gemäß der Erfindung hat den Vorteil, dass die Späne des jeweils bearbeiteten Werkstückes sehr kurz sind, und zunächst nach unten weg von der Schneide des Fräsers tief in die Spanabführrille abgeführt und dann nach oben in Richtung auf das Einspannende des Fräsers umgelenkt werden. Hiermit werden Spanklemmer zuverlässig vermieden.

Es sind natürlich weitere Modifikationen und Abänderungen des beschriebenen Fräsers möglich, die ein Fachmann ohne weiteres erkennen kann; die Erfindung wird jedoch durch die beiliegenden Ansprüche definiert.

## Patentansprüche

1. Fräser zum spanabhebenden Bearbeiten von Werkstücken, mit einem zylindrischen Werkzeugschaft, der ein oberes Einspannende zum Einspannen des Fräsers in eine Fräsmaschine und einen sich daran anschließenden Fräsbereich aufweist, wobei der Fräsbereich zumindest eine Frässchneide aufweist, die in Umfangsrichtung des Fräsers gelegen ist und sich in einem Schraubengang mit einem gegenüber der Mittelachse des Fräsers angestellten Steigungswinkel erstreckt, wobei sich an die Frässchneide jeweils eine Spanabführrille zum Abführen der beim Fräsen erzeugten Späne des zu bearbeitenden Werkstückes mit einer von der Frässchneide ausgehenden Freifläche gelegen ist, **dadurch gekennzeichnet, dass** zumindest ein Teil der Freifläche (7) mit einer Schruppverzahnung (8) versehen ist, die von der Frässchneide ausgeht und sich, in Umfangsrichtung des Fräsers gesehen, über zumindest einen Teil des Querschnittes der jeweiligen Spanabführrille (6) erstreckt.

2. Fräser nach Anspruch 1, **dadurch gekennzeichnet, dass** die Schruppverzahnung in Längsrichtung der Schraubengänge als aufgeraute Oberfläche der Freifläche (7) ausgebildet ist.

3. Fräser nach Anspruch 1 oder Anspruch 2, **dadurch gekennzeichnet, dass** die Schruppverzahnung (8) ein Wellenschliff ist, der abwechselnd Berge (9) und Täler (10) aufweist.

4. Fräser nach Anspruch 3, **dadurch gekennzeichnet, dass** der Abstand zwischen benachbarten Bergen (9) und Tälern (10) der Schruppverzahnung (8) geringer ist als die in Umfangsrichtung des Fräsers gesehene Breite einer Spanabführrille (6).

5. Fräser nach Anspruch 3, **dadurch gekennzeichnet, dass** der Abstand zwischen benachbarten Bergen (9) und Tälern (10) der Schruppverzahnung (8) etwa ein Zehntel bis etwa die Hälfte der Breite der jeweiligen Spanabführrille (6) in Umfangsrichtung des Fräsers beträgt.

6. Fräser nach einem der vorhergehenden Ansprüche, **dadurch gekennzeichnet, dass** nur ein Teil der Freiflächen (7) mit einer Schruppverzahnung (8) versehen ist, und dass der verbleibende Teil der Freiflächen (7) als glatte Schlichtflächen (11) ausgeführt ist.

7. Fräser nach Anspruch 6, **dadurch gekennzeichnet, dass** die in Umfangsrichtung des Fräsers aufeinander folgenden Freiflächen (7) der Frässchneiden abwechselnd mit einer Schruppverzahnung (8) bzw. einer Schlichtfläche (11) versehen sind.

8. Fräser nach Anspruch 6, **dadurch gekennzeichnet, dass** jede Freifläche abwechselnd Schruppbereiche mit einer Schruppverzahnung (8) und Schlichtbereiche mit einer glatten Schlichtfläche (11) aufweist, und dass jeder Schlichtbereich (11) einer Freifläche in axialer Richtung des Fräsers auf einer im Wesentlichen gleichen axialen Höhe eines Schruppbereiches (11) einer benachbarten, im Drehsinn des Fräsers vorlaufenden Freifläche (7) liegt.

9. Fräser nach Anspruch 8, **dadurch gekennzeichnet, dass** der Schlichtbereich (11) einer Freifläche (7) in axialer Richtung des Fräsers den Schruppbereich (8) der in Umfangsrichtung des Fräsers benachbarten Freifläche (7) überdeckt.

10. Fräser nach Anspruch 9, **dadurch gekennzeichnet, dass** der Schlichtbereich (11) einer Freifläche in axialer Richtung des Fräsers den Schruppbereich (8) der benachbarten Freifläche (7) auf beiden Seiten überlappt.
